# EUROPEAN PATENT APPLICATION

(11) **EP 1 694 043 A1**
(43) Date of publication of application: **23.08.2006**
(21) Application number: 05290272.3
(22) Date of filing: 08.02.2005
(51) Int. Cl.: H04M 3/42, H04Q 7/22

(54) **SMS transport using CTI link of a node in a network**

(71) Applicant: ALCATEL, 75008 Paris (FR)
(72) Inventor: Gass, Raymond, 67150 Bolsenheim (DE)
(74) Representative: Brose, Gerhard

(57) **Abstract**

A Communication system comprising at least a Private Branch Exchange (PBX) and a computer (PC) with Computer to Telephone Integration (CTI) server, the Private Branch Exchange (PBX) and the Computer to Telephone Integration (CTI) server based on Computer Supported telephony Application (CSTA) Standard, characterized in that the private branch exchange (PBX) as well as the Computer to Telephone Integration (CTI) server comprise means to exchange SMS with each other

## Description

### Field of the invention

The invention relates to a communication system comprising at least a private branch exchange and a computer with computer to telephone integration, a private branch exchange for use in the system and a method for running the communication system.

### Background of the invention

Short Message System (SMS) was originally designed for public land mobile networks (PLMN) to allow users to send and receive short text messages. In recent developments, SMS was more and more integrated in other communication systems such as nalog or digital public switched telephone networks (PSTN,ISDN etc.), or unified messaging systems (UMS) and even digital enhanced cordless telecommunications (DECT) phones. When sending a SMS-message via a private branch exchange (PBX), a telefone system and a telefone line such as ISDN is used to transmit the SMS data.

Computer Supported Telephony Application (CSTA) is a standard protocol used for connecting telecommunications systems to Information Technology (IT) systems.

However, when connecting an IT system via CSTA to a PBX, the IT system cannot exchange SMS with the PBX.

### Objects of the invention

It is an object of the invention to allow transport of SMS between a PABX and an IT system connected to the PBX by CSTA protocol.

### Summary of the invention

The above mentioned object is achieved by a communication system comprising at least a Private Branch Exchange (PBX) and a computer (PC) with Computer to Telephone Integration (CTI) server, the Private Branch Exchange (PBX) and the Computer to Telephone Integration (CTI) server based on Computer Supported telephony Application (CSTA) Standard, characterized in that the private branch exchange (PBX) as well as the Computer to Telephone Integration (CTI) server comprise means to exchange SMS-messages with each other. SMS-messages are text messages in a service for sending text messages via telephone systems.

The means to exchange SMS-messages is preferably a software module of the Private Branch Exchange (PBX) and a software module of the Computer to Telephone Integration (CTI) server. Preferably, the software module is integrated in an application programming interface (API) layer of the software.

In a preferred embodiement, the system further comprises a first SMS Center having means to communicate with the Computer to Telephone Integration server. Preferably, both communicate via TCP/IP protocol or the like when running on different IT systems or any kind of inter-process communication provided by the system software when running on the same IT system.

In a further preferred embodiement, the SMS Center and the Computer to Telephone Integration server are software programs or software modules running on the same computer.

The above mentioned object is also achieved by a Private Branch Exchange (PBX) comprising a Computer Supported Telephony Application socket based on Computer Supported Telephony Application (CSTA) Standard, characterized in that the private branch exchange (PBX) comprises means to exchange SMS with a Computer to Telephone Integration (CTI) server.

The above mentioned object is also achieved by a Method for running a communication system according to one of the preceding claims, characterized in that
- a telephone or a CTI-Application generates a SMS Message and sends it to the private branch exchange (PBX)
- the private branch exchange (PBX) identifies the SMS Message
- the private branch exchange (PBX) routes the SMS message towards the SMS Center.

### Brief description of the drawings

Fig. 1 shows a sketch of a system according to the invention;
Fig. 2 shows a sketch of a PBX software layer architecture according to the invention.

### Detailed Description of the Invention

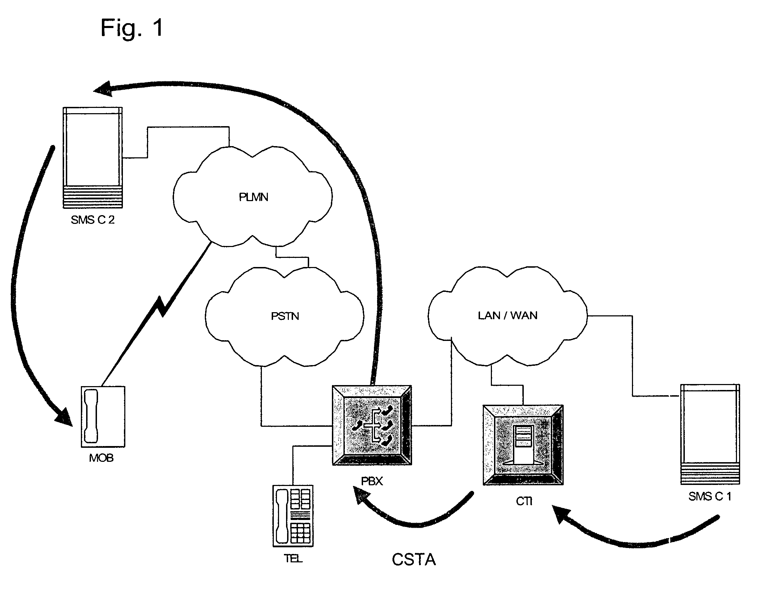

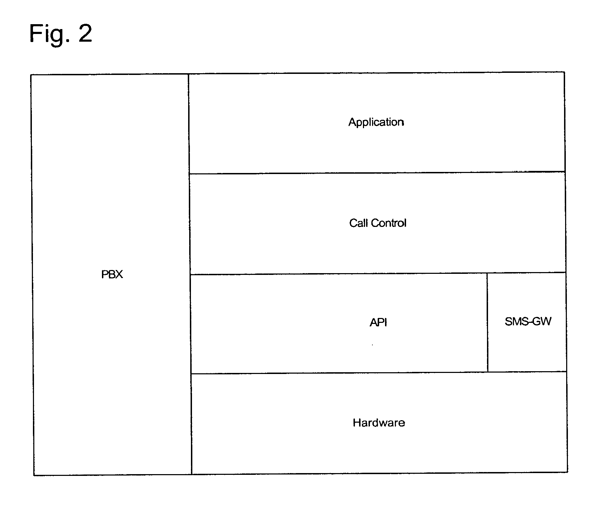

A Communication system according to Fig. 1 comprises a private branch exchange PBX which handles incoming and outgoing calls for one or a multitude of connected telephones TEL. The Communication system comprises a computer to telephone integration (CTI) application, which is e.g. a software application running on an Information Technology (IT) system, e.g. a Personal Computer (PC) or the like. A Computer Supported telephony Application (CSTA) socket, which is a software module (see Fig. 2) in the BPX, provides a set of commands to control telephone and data transfer capabilities of the PBX by the PC or the like. The PC is therefor connected by a data link, e.g. a serial line, an ethernet connection or the like with the PBX.

The Computer Supported telephony Application (CSTA) socket of the PBX is a set of programming libraries that allow the CTI server or other IT systems and the BPX to interact via the data link.

The private branch exchange PBX comprises a short message system (SMS) gateway SMS-GW, as depicted in Fig. 2, which is implemented as a software module as a means to exchange SMS. SMS is a service for sending short text messages e.g. to mobile phones. If the PBX receives a SMS, e.g. from a telephone connected to the PBX, the short message gateway SMS-GW recognices the datagram being a SMS and sends it via telephone line (ISDN etc.) to an apropriate SMS center SMSC2 of the PSTN or PLMN, which transmits the SMS to the desired telephone number. Fig. 1 shows as an example an SMS center SMSC2 inside the PLMN, the SMS center may also be located in the PSTN.

A local SMS Center SMS-C1, e.g. a software program or software module running on a separate machine as a node in a network, a Local Area Network (LAN) or a Wide Area Network (WAN), or on the IT system running the CTI application, allows the user of the PC/PBX to create an SMS and deliver it via the CTI server or to receive a SMS from the CTI server.

The CTI server and the PBX communicate with each other via Computer Supported Telephony Application (CSTA) Standard. The SMS Center SMS-C1 and the CTI server communicate with each other e.g. via TCP/IP or any other data transmission protocol.

According to the invention, the Computer Supported Telephony Application (CSTA) Standard protocol is enhanced by protocoll means for exchanging SMS data between applications or systems, servers etc. respectively. This means that the CTI server is able to transmit a SMS via CSTA protocol to the PBX and vice versa.

Abbreviations:
API application programming interface
CTI computer telephony integration
IP Internet Protocol
ISDN Integrated Services Digital Network
PBX private branch exchange
POTS plain old telephone system
PSTN public switched telephone networks
SMS short message system
SPI service provider interface

## Claims

1. A Communication system comprising at least a Private Branch Exchange (PBX) and a computer (PC) with Computer to Telephone Integration (CTI) server, the Private Branch Exchange (PBX) and the Computer to Telephone Integration (CTI) server based on Computer Supported telephony Application (CSTA) Standard, **characterized in that** the private branch exchange (PBX) as well as the Computer to Telephone Integration (CTI) server comprise means to exchange SMS-messages with each other.

2. A Communication system according to claim 1, **characterized in that** the means to exchange SMS-messages is a software module of the Private Branch Exchange (PBX) and a software module of the Computer to Telephone Integration (CTI) server.

3. A Communication system according to claim 1 or 2, **characterized in that** the software module is integrated in an application programming interface (API) layer.

4. A Communication system according to one of the preceding claims, **characterized in that** the system further comprises a SMS Center (SMS-C1) having means to communicate with the Computer to Telephone Integration (CTI) server.

5. A Communication system according to claim 4, **characterized in that** the SMS Center (SMS-C1) and the Computer to Telephone Integration (CTI) server are software modules running on the same computer.

6. A Private Branch Exchange (PBX) comprising a Computer Supported Telephony Application socket based on Computer Supported Telephony Application (CSTA) Standard, **characterized in that** the private branch exchange (PBX) comprises means to exchange SMS with a Computer to Telephone Integration (CTI) server.

7. A Method for running a communication system according to one of the preceding claims, **characterized in that**
- a telephone or a CTI-Application generates a SMS Message and sends it to the private branch exchange (PBX)
- the private branch exchange (PBX) identifies the SMS Message
- the private branch exchange (PBX) routes the SMS message towards the SMS Center.
